# EUROPEAN PATENT SPECIFICATION

(11) **EP 3 835 950 B1**
(45) Date of publication and mention of the grant of the patent: **25.10.2023**
(21) Application number: 19214499.6
(22) Date of filing: 09.12.2019
(51) Int. Cl.: G06F 9/4401, G06F 21/79, G06F 21/62

(54) **METHOD FOR CONFIGURING AN EMBEDDED DEVICE**
VERFAHREN ZUR KONFIGURIERUNG EINER EINGEBETTETEN VORRICHTUNG
PROCÉDÉ DE CONFIGURATION D'UN DISPOSITIF INTÉGRÉ

(43) Date of publication of application: 16.06.2021
(73) Proprietor: Spinellis, Diomidis, 104 34 Athens (GR)
(72) Inventor: Spinellis, Diomidis, 104 34 Athens (GR)
(74) Representative: Weickmann & Weickmann PartmbB

(56) References cited:
- WO-A1-2012/006737
- US-A1- 2008 005 409
- US-A1- 2011 125 806
- US-B1- 6 927 756

## Description

### Field

The present invention relates to a method for configuring an embedded device of a specific (first) type in a computing environment by means of a host device, wherein the embedded device comprises a computing unit, which is adapted to provide configurable functionality according to externally input configuration items, and the host device comprises an operating system running thereon, wherein the operating systems provides respective means for communication with embedded devices. Furthermore, the invention relates to a computer-readable storage medium, comprising instructions for performing such a method, an embedded device for performing such a method and a system comprising the embedded device and a host device.

### Background

It has previously been known to have a host device in a computing environment communicate with embedded devices by means of dedicated communication protocols on application or operating system level, which requires the installation and execution of specialized software or drivers. Such an installation of specialized software and its subsequent maintenance can be cumbersome for end users who generally expect their newly acquired devices to work straight away without any additional steps to be taken. Additionally, this approach is challenging when mismatched operating systems (Windows, Android, MacOS, Linux etc.) and/or mismatched software applications are used, and also since enterprise users typically lack the administrative access to install the required software on their devices, while outdated software or even incompatible versions of the same software can be prohibitive for smooth access to the dedicated communication channels. On the other hand, it is well established that all commonly used operating systems for host devices inherently offer communication functionality for certain basic types of peripheral devices, such as file systems, keyboards and printers, without the need of additional software to be installed and running under the respective operating system. However, these communication channels are currently often useless for more specialized devices which usually require the above mentioned additional drivers or software applications to be properly addressed and configured by means of a host device.

US 2008/005409 A1 discloses a lockable universal serial bus mass storage device controlled using a second interface. WO 2012/006737 A1 presents communicating with a modem device using a virtual mass storage interface and file read /write operations. US 2011/125806 A1 performs configuration of a network printer via WebDav commands. US 6927756 B1 presents a universal serial bus remote control device, that receives commands from a second keyboard lock indicator.

### Summary

It is therefore an object of the present invention to provide a novel method for configuring an embedded device that eliminates the need for dedicated driver or software application installation and execution and thus constitutes a platform-independent, reliable and intuitive way of configuring a wide array of embedded devices.
In order to achieve this object, a method according to appended claim 1 is proposed.

### List of Figures

Fig. 1 a schematic view of a system for accessing securely stored data according to the invention;
Fig. 2 a state/flow diagram illustrating an embodiment of a method according to the invention;
Fig. 3 an embodiment of information displayed to a user on a screen of the host device in the system of Fig. 1 when performing the method according to Fig. 2.

### Detailed description

The invention relies on the inherent capabilities of all common operating systems to communicate with a finite number of certain basic types of peripheral devices, which in the present context are referred to as "predetermined types" of devices. In order to be able to use said communication channels, the embedded device cloaks its actual identity and identifies itself as a "second type" of device found among the predetermined devices and different from its actual first type. Based on said cloaked identity, the host device is capable of sending data to the embedded device using the communication protocol established for the selected device identity, which data in the context of the present invention will be referred to as "configuration items". Said communication items will then be received by the computing unit of the embedded device which is able to extract the relevant information from the supplied data in order to perform the configuration of the embedded device. Thus, the method according to the invention may be considered to comprise an overloading of basic communication functions of the operating system originally reserved for basic peripheral devices in order to provide configuration items to embedded devices not originally supported by the operating devices without additional drivers or software application. Possible predetermined types of embedded devices, with which all common operating systems are able to communicate without additional drivers or software applications include printers, storage systems and keyboard lock indicators, such as Caps Lock or Num Lock. Examples for operating system level printer communication in turn include lpr and CUPS commands found in different UNIX systems as well as the Print Spooler API functionality of Windows systems. In a similar manner, storage systems and keyboard lock indicators also have their respective sets of commands and communication channels readily available across different operating systems. Further possible examples of predetermined types of embedded devices may be known to the person skilled in the art or may even be established in the future. In any case, the computing unit of the embedded device in order to be able to perform the method according to the invention has to be able to identify the embedded device to the host device as one of the predetermined types of devices and to receive and process data of the respective communication protocol.

According to the present invention, a second type of device as which the computing unit may identify the embedded device to the host device is a virtual file system, wherein the means for communication therewith comprise writing to a file or renaming a file or a directory stored in the virtual file system. Even though a virtual file system does not constitute a physical device as such, in the context of the present invention it may well serve as a predetermined type of device. Thus, the computing unit of the embedded device will typically present to the host device a virtual storage volume comprising directories and/or files, which may be manipulated by the host device in order to supply the configuration items to the computing unit of the embedded device by means of file system manipulation commands, from which said computing unit will extract the relevant information.

Therein, the means for entering the configuration items is constituted by an interface alllowing to rename a file or directory with the configuration items. Said interface may in turn be constituted by all suitable means known to the person skilled in the art such as command line access to file system commands for example provided by Unix command line interfaces or Windows power shell or higher level graphic file managers provided with most Linux distributions and versions of Windows and macOS.

In some examples, the embedded device may be operable in at least two discrete operational states wherein the configurable functionality comprises toggling between the discrete operational states. Particular embodiments may comprise switching on and off certain functionalities of the embedded device and choosing between different operation modes or parameter sets for the operation of the embedded device. It has to be understood, however, that the present invention in its broadest sense is not limited to toggling between discrete states but may be used to configure arbitrary functionality of the embedded device.

According to the invention, the configurable functionality of the embedded device comprises a functionality with protected access and the configuration items may comprise access details, wherein in an unlocked state of the embedded device access to the functionality is granted and in a locked state of the embedded device access to the functionality is denied, wherein the computing unit of the embedded device verifies the received access details against preset access details in order to unlock the embedded device, wherein preferably the computing unit based on the received configuration items furthermore performs at least one of initially presetting the access details, locking the embedded device and resetting the embedded device to its initial state.

Thus, the method according to the invention may for example serve as a means to provide a passphrase or similar access credentials constituting the configuration items to the embedded device upon which the computing unit of the embedded device may enter an unlocked state and provide access to a formerly denied functionality. Even though different communication channels as explained above may be used for providing this kind of configuration, a particularly suited second type of device may be given by the above-mentioned virtual file system with the functionality of renaming a file or directory with the configuration items. One concrete embodiment in the form of a secure removable storage will be explained below in greater detail.

Said exemplary concrete embodiment comprises a storage unit as the embedded device and its configurable functionality is accessing data stored in the storage unit, wherein preferably the data is stored in an encrypted manner and the accessing thereof comprises decrypting the data and/or wherein preferably the accessing of the data comprises a transfer of the data, for example by means of the Media Transfer Protocol or the USB Mass Storage Access Protocol. It has to be kept in mind that in said embodiment, the physical storage unit serves as the first type of embedded device while a virtual file system may serve as the second type of device as explained above. Thus, in this particular as well as in related embodiments, physical storage devices and virtual file systems are to be explicitly considered different types of devices.

In order to provide a more intuitive user experience, the presenting a user of the host device with a means for entering configuration items may comprise presenting the user with instructions on how to enter the configuration items. Possible examples for this measure may include naming the second device as which the embedded device presents itself to the host device in a manner that the user can derive the operation principle of the means for entering the configuration items based on said name or in the case of the above-mentioned requesting to rename a file or directory of a virtual file system, the original name of the file or directory to be renamed may comprise human readable instructions for entering the respective configuration items.

On the other hand, as an additional safety layer, the presenting a user of the host device with a means for entering configuration items may comprise obfuscating the configurable functionality to the user. Thus, in the example of providing a virtual file system for entering the configuration items by means of renaming files or directories, a large number of dummy files or directories may be provided amongst which only one or a few selected ones are designated for entering the configuration items such that security by obscurity or plausible deniability may be achieved in a sense that a user of the host device may not even be aware of the configurable functionality of the embedded device.

According to another aspect, the present invention relates to a computer-readable storage medium, thereon comprising instructions which, when executed by a processor, perform the method of the present invention as outlined above. It shall be understood that said computer-readable storage medium may be of any type known to the person skilled in the art and that the computer-readable code comprising the instructions can be provided to a suitable embedded device in order to carry out the method according to the invention at any time before or after its first use.

Furthermore, the invention relates to an embedded device of a first type for performing a method according to the invention, comprising a coupling unit for coupling the embedded device to a host device and a computing unit, which is adapted to identify the embedded device to the host device as a second type of device, wherein the second type is different from the first type, receive the configuration items from the host device, and perform configuration of the embedded device according to the received configuration items.

Possible embodiments of the embedded device comprise input devices, such as a configurable keyboard or a remote control, a wearable device, for example a health monitor device or a smartwatch, a configurable network device, and a removable storage device. Depending on the type of embedded device and the desired extent of configurability, the configuration items can be used to either toggle between at least two discrete operational states of the device or for a range of configurable access features.

The coupling unit of the physical device may be adapted for physical coupling with the host device, wherein the coupling unit preferably comprises a USB protocol. However, different embodiments of the coupling device for physical coupling can be employed, and the embedded device may also be coupled to the host device in a wireless manner, for example via Bluetooth or similar wireless technologies.

Lastly, the invention relates to a system for accessing configurable functionality on an embedded device according to the invention, comprising the embedded device and a host device comprising a processing unit, an operating device running thereon and an interface for interaction with a user. One of the main advantages of the present invention is the portability between different hardware and operating systems of the host device, such that it may be embodied by a wide variety of computing devices, including personal computers, portable computers and also mobile devices such as smartphones or tablets running all commonly used operating system such as Windows, macOS, Linux, Android, etc. The only requirements for the host device and its operating systems are the capability of coupling an embedded device thereto and communicating with at least one predetermined type of embedded device serving as the second device in the present invention.

In an even more convenient embodiment, the operating system of the host device upon a detection of the coupling of the embedded device may perform a predetermined action based on the second type of device as which the embedded device presents itself to the host device. Said action can be triggered by AutoPlay, AutoRun or similar functionalities provided by many operating systems, which automatically examine newly discovered embedded devices and launch an appropriate application to play or display its content. In the above cited example of the second device being a virtual file system, said application may be a file manager or a similar application which may automatically be launched and displays icons for files or folders together with their names and offers a mechanism for renaming said files or folders.

Alternatively, the user may be required to start a suitable application himself/herself in order to be able to rename the corresponding file or folder. It shall be stated in this context that said application does not necessarily have to be provided by the operating system since the present invention merely requires an operating level communication channel to the second type of embedded device such that the application may increase usability, yet the input by the user may for example simply be performed by pressing certain keys on a keyboard without a high-level application running.

In order to clarify the scope and terminology of the present invention, a non-exclusive list of exemplary embodiments as well as comparative examples not according to invention and present for illustration purposes only will be discussed in the following, in which the method and system of the invention can be incorporated in an especially beneficial manner.

### First Example (not according to the invention)

Presentation clickers are single-purpose remote controls which can be coupled to a host computer, e.g. via Bluetooth, in order to allow a user a hands-free scrolling between pages during presentations or speeches by means of a single pair of next/previous buttons. Since some software applications for this purpose require pressing the PgUp/PgDn-keys in order to select the next or the previous page and other software applications require the left/right-arrow keys, it can be desirable to enable the presentation clicker to switch between two configurable operation modes, in which it sends the respective PgUp/PgDn or left/right-arrow signal to the host computer upon pressing the respective button.

In presentation clickers known in the art, either a hardware switch had to be incorporated in order to select between the two possible operation modes or a driver or dedicated software application had to be installed on a host computer in order to configure the clicker. With the present invention, an easier and faster method for said configuration becomes possible by employing communication channels and protocols already provided by all commonly used host device operating systems. For this purpose, upon coupling with the host device, e.g. by means of a USB cord or a wireless protocol such as Bluetooth, the device will not communicate with the host device as its actual first type of embedded device, in this case a two-button keyboard, but rather as a second type of device, in the present example a full-featured keyboard. Since all commonly used operating systems comprise means to communicate with keyboards including sending lock indicator signals to them based on which the NumLock, CapsLock and ScrollLock LEDs of the keyboards will be operated (lit), within the scope of the present invention, the means for entering communication items can be given by the customary keyboard of the host device, such that when the dedicated key (Scroll Lock, Num Lock or Caps Lock) for configuring the clicker is pressed on the host device keyboard (serving as the "entering of the configuration items" in the language of the present application), the host device will send a respective lock indicator signal to the clicker identifying itself as a full-featured keyboard. Now, the computing unit of the clicker is adapted to interpret said lock indicator signal as a command to switch between its two possible configurable operation modes, such that the configuration of the clicker can be completed without the need of any dedicated driver or software application for the clicker to be installed on the host computer.

### Second Example (not according to the invention)

A second comparative example not according to the present invention may be embodied by a configurable health care device, such as a pulse rate monitor, which may be coupled to a host device wirelessly or by means of a USB cord and is adapted to identify itself to the host device as a printer.

Using the basic printing capabilities provided by all commonly used operating systems, specially formatted pages may be "printed" to the health care device in such a manner that its computing unit will configure it according to the information provided on the printed pages. Examples for such configuration items may comprise allowed heart rate ranges outside of which the user will be notified or a minimum number of steps a user is supposed to walk per day before he/she will be notified of his/her success.

In a modification of the second example, also a configurable network device might identify itself to a host computer as a printer and various configuration items such as white lists or black lists of permitted and non-permitted IP addresses or TCP/UDP ports or on/off flags concerning the network traffic as a whole may be sent to the device by means of the printer communication channel provided by the operating systems and specially formatted pages "printed" to the device. Still further modifications of the second example can include configurable keyboards and similar devices.

### Third example

In the following, an embodiment of the present invention will be described in even more detail and making reference to the drawings.

The third example relates to a removable storage device for securely storing data, such as a USB flash drive or a portable hard disk drive. Such devices allow the effortless transferring of files between multiple computers avoiding the drawbacks and limitations often associated with online communication, such as e-mail file size limits, low bandwidth delays, eavesdropping risk, lack of connectivity or firewall restrictions as well as the requirement to rely on third-party providers of cloud storage, which are often associated with the risk of data loss, security breaches, regulatory compliance complications and substantial costs.

However, storing data on removable storage devices in possession of individuals and organizations comes with risks associated with data confidentiality and integrity. A forgotten or misplaced removable storage device can disclose valuable data or even allow third parties to alter it. This is especially important when and, as often the case, the data concerns confidential and/or personal information. Possible leaks may expose individuals to identify theft or institutions to industrial espionage.

In the past, security breaches have happened in which, solely through the loss of USB flash drives, personal details of thousands of private pension holders have occurred, while in another case, a USB flash drive was stolen with the names, grades and social security numbers of thousands of former students of a university. It has even occurred that USB flash drives with classified military information were found for sale in public market places both online and offline. A study sponsored by IBM has found in 2018 that the average cost of each data breach amounts to 2.86 million dollars.

Previously, application-level or operating system-level encryption or other access control has been used in order to mitigate the above-described problems. However, additional burdens have been introduced by said access control methods, in particular both parties concerned with writing and reading the corresponding data need to have compatible access control or device driver software available or installed on their hardware. This approach is especially challenging when mismatched operating systems (Windows, Android, MacOS, Linux etc.) and/or mismatched software applications (BitLocker, DiskCryptor, VeraCrypt, GnuPG, 7-Zip, etc.) are used, and also since enterprise users typically lack the administrative access to install the required software on their devices, while outdated software or even incompatible versions of the same software can be prohibitive for smooth access to protected files on removable storage devices.

As a somewhat more platform-independent measure, removable storage devices, such as USB flash drives, with native encryption have been introduced, but they either require proprietary drivers which suffer from the above-described compatibility problems or are supplied with a costly, cumbersome and unreliable embedded keyboard or an expensive and insecure biometric sensor.

Using the method according to the present invention may overcome the above-identified problems and provide secure communication with the embedded device while neither requiring the installation and use of dedicated communication software nor the installation of driver software on a host device nor the embedding of a keyboard or biometric sensor on the embedded device itself.

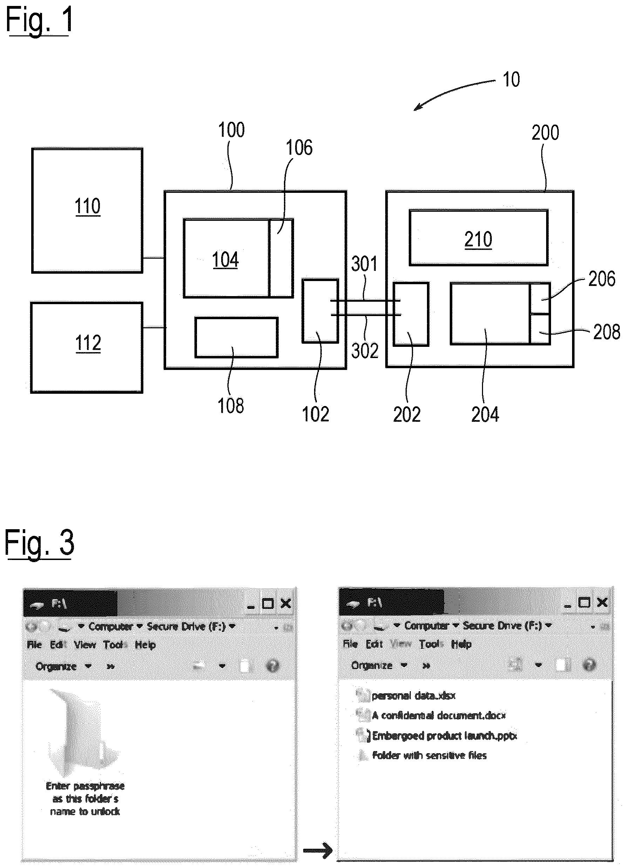

In Fig. 1, a schematic view of a system according to the invention is illustrated and generally denoted with reference numeral 10. The system consists of a host device 100 and a removable storage device 200 acting as the embedded device in the sense of the invention, which are coupled by means of respective coupling units 102 and 202. The coupling units 102 and 202 may for example be USB plug and socket or similar physical coupling arrangements, or in an alternative embodiment may also be wireless coupling units such as Bluetooth transceivers. The coupling units 102 and 202 communicate via the logical interface 301, which presents the removable storage device 200 as a device of a first type, and the logical interface 302, which presents the removable storage device 200 as a device of a second type.

The host device 100 may for example be a personal computer which in addition to the coupling arrangement 102 comprises known components such as a processor 104 with a volatile memory in the form of random access memory 106 and a non-volatile memory 108 such as a hard disk drive.

Furthermore, the host device 100 comprises peripheral devices such as a display unit 110 and input means 112 such as a keyboard and/or a mouse, wherein the display unit 110 and the input devices 112 provide an interface for interaction with a human user of the host device 100. The host device 100 is running an operating system which is stored in its non-volatile memory 108 and uses the volatile memory 106 during run time. Said operating system provides both low-level and high-level functionalities, both of which are employed in embodiments of the present invention, in particular on the one hand the high-level abilities to display information to the user by means of the display device 110 and to retrieve input from the user by means of the input devices 112 and on the other hand the low-level abilities to manipulate files stored in both the physical storage units and virtual file systems, for example by writing to them or renaming them. In this context, the term "file" may also encompass directories or folders in different types of filesystems known in the art.

On the other hand, the removable storage device 200 in addition to its coupling unit 202 also comprises a computing unit 204 which may be embodied by a microprocessor or microcontroller which associated thereto has a non-volatile memory such as an EEPROM 206 on which software to be run by the microprocessor 204 is stored in a non-volatile manner, wherein the microprocessor 204 furthermore has a volatile memory 208 associated thereto which is used by the microprocessor 204 during the runtime of said software.

Additionally, the storage device also comprises a dedicated storage unit 210, which can for example in turn comprise blocks of flash memory, on which large amounts of data can be stored, preferably in a protected manner, e.g. through encryption. Alternative implementations of the removable storage device 200 may combine the non-volatile memory 206 with the storage unit 210 such that software and data are stored in a common memory. Said data may have been copied to the storage unit of the removable storage device from the host unit 100 or any other compatible computing device already in a protected manner or it may have been protected during its transfer to the removable storage device from the host device 100 or any other compatible computing resource by the computing unit 204 of the storage device 200.

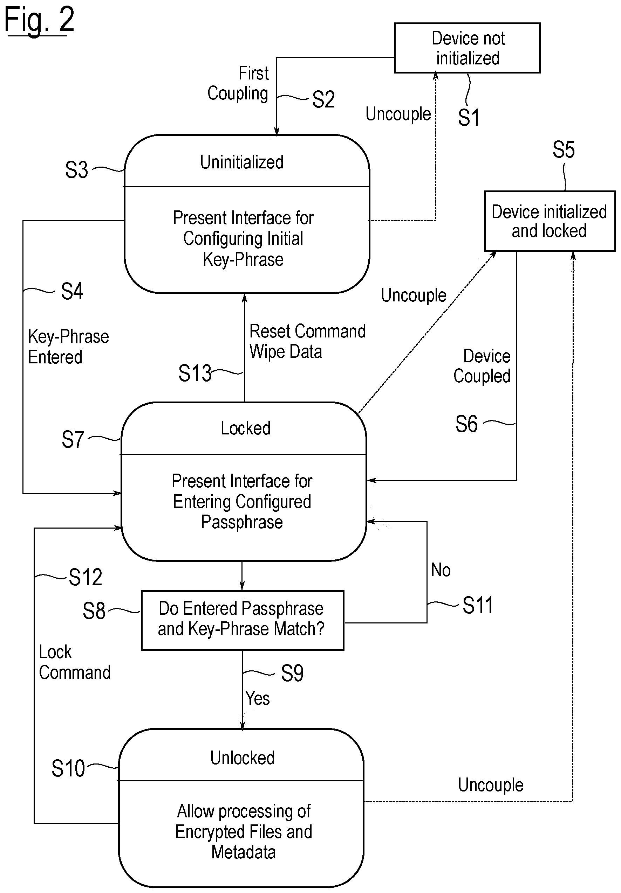

For the accessing of the protected data stored in the storage unit 210 of the removable storage device 200, a method connected to the state/flow diagram shown in Fig. 2 is employed, which embodies a method according to the present invention. For this purpose, the removable storage device 200 identifies to the host device 100 via the logical interface 302 as a virtual file system which serves as the second type of device in the sense of the invention, while the storage device 200 itself is of the first type of device.

In state S1, the removable storage device 200 is not yet initialized and thus neither has protected data stored in its storage unit 210 nor access details defined, which will serve as a way for accessing the (protected) data. Thus, after its first coupling to a suitable host device 100, which is illustrated by arrow S2, said host device 100 will cooperate with the computing unit 204 of the removable storage device in order to initialize the removable storage device 200 in the initialization step S3. For this purpose, in the present embodiment, the user will be presented an interface for configuring the access details of the storage device 200 in step S4, which will refer to the second type of device as which the storage device 200 identifies itself to the host device 100. In the present example, the access details and all further information entered by the user will serve as configuration items in the sense of the present invention.

In one embodiment discussed herein, the user will be presented a folder icon in a file manager application of the operating system of the host unit 100 on its display 110 in a similar manner as is shown in Fig. 3 and discussed below which is the typical tool of the present operating system for allowing user operations on file systems, including the present virtual file system serving as second type of device. The user can now rename the folder with a suitable alphanumeric string which will be forwarded from the host device 100 to the computing unit 204 of the storage device 200 by means of basic file system manipulation functionality natively supported by the operating system of the host device 100. In order to assist the user with said task, the folder to be renamed may initially have a name consisting of instructions on how to set a key-phrase in a similar manner as is shown in Fig. 3 in connection with the entering of the access details at a later stage of the method. At this stage and by means of the method according to the invention, a simple access method (e.g. through a passphrase, password, or PIN) can be configured, or one or more operations can be used to configure more sophisticated access control, e.g. through user identifiers, passwords, roles, and corresponding access rights.

The computing unit 204 of the storage device retrieves the alphanumeric string from the host device 100 and initializes the storage in a protected manner, for example by means of a symmetrical encryption key associated directly or indirectly with the provided access details. After said initialization step S3, the removable storage device 200 is initialized yet in a locked state, corresponding to state S7 discussed below. In an alternative implementation, at this point, the removable storage device might also enter state S10 as discussed below, in which it is ready to process secure data. In case the storage device 200 is uncoupled from the host device 100 before the key-phrase is properly set through the operation just described, it will return to its uninitialized state S1 as illustrated by the corresponding dashed arrow.

As soon as the coupling between the host device 100 and the initialized removable storage device 200 is cut once step S4 has been performed, for example by physically disconnecting the coupling units 102 and 202 or in case the host device 100 is powered down, as illustrated by the corresponding dashed arrow, the storage device 200 enters, actively or by default, a locked state S5, in which access to the protected files is denied.

After re-coupling the storage device 200 with the host device 100 in its initialized, yet locked state in step S6, the storage device will enter state S7 and the user of the host device 100 will be presented the folder icon in the above-mentioned file manager application of the operating system of the host unit 100 on the display 110 as shown in Fig. 3, left side. The user may now enter access details serving as configuration items, e.g.by renaming the folder shown in Fig. 3, and the entered access details are forwarded from the host device 100 to the computing unit 204 of the storage device 200 by means of the basic file system manipulation functionality of the operating system of the host device 100 discussed above.

Now, the computing unit 204 will again verify if the access details are compatible with those provided in step S8, e.g. by deriving the encryption key from the access details, and in case they can be correctly used to access the protected data (state S9), the storage device will enter state S10 in which the storage device 200 is unlocked and data can be transferred thereto and retrieved therefrom by means of file transfer operations provided by the operating system of the host device 100 via the logical interface 301, wherein the computing unit 204 of the removable storage device 200 may perform additional encryption and/or decryption operations during said file manipulation operations. Fig. 3, right side refers to such an unlocked state, in which the user can perform file manipulation operations by means of the file manager application of the operating system of the host device 100 as previously discussed. Similarly to state S7, if the storage device 200 gets uncoupled from the host device 100 while in state S10, the storage device 200 enters locked state S5, as illustrated by the corresponding dashed arrow, in which access to the protected files is denied.

On the other hand, in case the entered and forwarded access details and the stored key-phrase in cannot be used to access the protected data in step S8 (state S11), the user may again be presented the folder icon as shown in Fig. 3, left side, with its original name wherein additional safety measures can be taken, for example a maximum number of tries to enter the correct access details may be provided to the user before the removable storage device 200 permanently locks itself or wipes all stored data.

Through the operating system level mechanisms discussed above, which in the present example are related to renaming dedicated files with suitable alphanumeric names serving as commands to the computing unit 204, additional operations can be performed on the storage device 200, such as wiping data or resetting the key-phrase while the storage device is in state S7 (step S13) thus un-initializing the storage device 200 and returning it into its uninitialized state S3 or locking the storage device while in state S10 thus returning to state S7 (step S12). All of the respective inputs for said operations constitute configuration items in the sense of the present invention.

Although a commonly adopted approach for securing stored data is through encryption, other approaches are also possible. For example, the storage device 200 may store the initial access details and compare them against newly-entered ones to provide access to the (not necessarily encrypted) data when the entered access details match those stored when the device was initialized. The security vulnerabilities of this approach can be mitigated by utilizing secure tamper-proof hardware for implementing the storage device 200.

The method just described in the context of accessing data on a secure storage device, in which file or directory names in a virtual file system are modified in order to provide configuration items to a configurable embedded device may also be used for other types of embedded devices such as configurable keyboards. Nowadays, the task of programming macro-commands on computer keyboards is accomplished by dedicated, platform-specific application programs and/or device drivers. Applying the present invention to said task may allow to present a user a means for entering configuration items, such as the virtual file system discussed above, wherein the operation of each function key can be programmed simply by editing the file corresponding to the given key. For this purpose, the programmable keyboard also has to identify itself to the host device as a virtual file system.

Similarly, the communication with a USB-to-Ethernet adapter offering firewall functionality can also be performed without a dedicated application program and device driver, thereby making the device more portable and possibly also offering the potential to make it more secure. Specifically in an embodiment, the firewall's rules, such as white-lists or black-lists of IP addresses or TCP/UDP ports may be presented to the user through a virtual file system as files which can be edited. Other virtual files may provide details of accepted and rejected packets during the firewall's operation.

## Claims

1. Method for configuring an embedded device (200) of a first type in a computing environment by means of a host device (100), wherein:
- the embedded device (200) comprises a computing unit (204), which is adapted to provide configurable functionality according to externally input configuration items; and
- the host device (100) comprises an operating system running thereon, wherein the operating systems provides respective means for communication with a number of predetermined types of embedded devices;
the method comprising the following steps:
- coupling the embedded device (200) with the host device (100), wherein the computing unit (204) identifies the embedded device (200) to the host device (100) as a second type of device, wherein the second type may be different from the first type or operate in a different manner and is comprised of the predetermined types of devices;
- presenting or offering a user of the host device (100) with a means for entering configuration items;
- retrieving the configuration items entered by the user and supplying them to the embedded device (200) by a means for communication with the second type of device provided by the operating system;
- receiving the configuration items by the computing unit (204) of the embedded device (200); and
- performing configuration of the embedded device (200) according to the received configuration items by the computing unit (204),
**characterized in that** the means for communication with the second type of device are constituted through command-line access to file system commands or graphical file manager access provided by the operating system, wherein the second type of device as which the embedded device (200) presents itself to the host device (100) is a virtual file system, and wherein the means for communication therewith comprises creating or removing a file or directory, writing to a file or renaming a file, or a directory stored in the virtual file system,
wherein the means for entering a configuration item is constituted by a prompt requesting to rename a file or a directory and the means for entering a configuration item is constituted by renaming the prompted file or directory with the configuration item,
wherein the configurable functionality of the embedded device (200) comprises a functionality with protected access and the configuration items comprise access details,
wherein in a unlocked state of the embedded device (200) access to the functionality is granted and in a locked state of the embedded device (200) access to the functionality is denied,
- wherein the computing unit (204) of the embedded device verifies the received access details against preset access details in order to unlock the embedded device (200).

2. Method according to claim 1, wherein the predetermined types of embedded devices include printers, storage systems and keyboard lock indicators.

3. Method according to any of the preceding claims, wherein the embedded device (200) is operable in at least two discrete operational states, and wherein the configurable functionality comprises toggling between the discrete operational states.

4. Method according to any of the preceding claims, wherein the embedded device (200) comprises a storage unit (210) and the configurable functionality is accessing data stored in the storage unit,
wherein preferably the data is stored in an encrypted manner and the accessing thereof comprises decrypting the data and/or
wherein preferably the accessing of the data comprises a transfer of the data, for example by means of the Media Transfer Protocol or the USB Mass Storage Access Protocol.

5. Method according to any of the preceding claims, wherein the presenting or offering a user of the host device (100) with a means for entering configuration items comprises presenting the user with instructions on how to enter the configuration items.

6. Method according to any claims 1 to 4, wherein the presenting or offering a user of the host device (100) with a means for entering configuration items comprises obfuscating the configurable functionality to the user.

7. Computer-readable storage medium, comprising instructions, which when executed by a processor, perform a method according to any of the preceding claims.

8. Embedded device (200) of a first type configured to performing a method according to any of claims 1 to 6, comprising:
- a coupling unit (202) for coupling the embedded device (200) to a host device (100); and
- a computing unit (204) which is adapted to:
∘ identify the embedded device (200) to the host device (100) as a second type of device, wherein the second type may be different from the first type or operate differently from the first type,
∘ receive the configuration items from the host device (100); and
∘ perform configuration of the embedded device (200) according to the received configuration items.

9. Embedded device (200) according to claim 8, wherein the embedded device is one of an input device, for example a configurable keyboard or remote control, a wearable device, for example a health monitor device or a smartwatch, a configurable network device or a removable storage device.

10. Embedded device (200) according to claim 9, wherein the coupling unit (202) is adapted for a physical coupling with the host device (100), wherein the coupling unit (202) preferably comprises a USB protocol.

11. System (10) for accessing configurable functionality on an embedded device (200) according to claim 9 or 10, comprising:
- the embedded device (200); and
- a host device (100) comprising a processing unit (104), an operating system running thereon and an interface (110, 112) for interaction with a user.

12. System (10) according to claim 11, wherein the operating system of the host device (100) upon a detection of the coupling of the embedded device (200) performs a predetermined action based on the second type of device as which the embedded device (200) presents itself to the host device (100).

## Patentansprüche

1. Verfahren zum Konfigurieren einer eingebetteten Vorrichtung (200) eines ersten Typs in einem Computer-Umgebung mittels einer Host-Vorrichtung (100), wobei:
- die eingebettete Vorrichtung (200) eine Verarbeitungseinheit (204) umfasst, welche dazu eingerichtet ist, eine konfigurierbare Funktionalität gemäß extern eingegebenen Konfigurationsobjekten bereitzustellen; und
- die Host-Vorrichtung (100) ein Betriebssystem umfasst, welche darauf läuft, wobei das Betriebssystem entsprechende Mittel für eine Kommunikation mit einer Anzahl von vorbestimmten Typen von eingebetteten Vorrichtungen bereitstellt;
wobei das Verfahren die folgenden Schritte umfasst:
- Koppeln der eingebetteten Vorrichtung (200) mit der Host-Vorrichtung (100), wobei die Verarbeitungseinheit (204) die eingebettete Vorrichtung (200) für die Host-Vorrichtung (100) als einen zweiten Typ von Vorrichtung identifiziert, wobei der zweite Typ von dem ersten Typ verschieden sein kann oder in einer anderen Weise arbeiten kann und aus den vorbestimmten Typen von Vorrichtungen umfasst ist;
- Präsentieren oder Anbieten eines Mittels zum Eingeben von Konfigurationsobjekten für einen Benutzer der Host-Vorrichtung (100);
- Erhalten der Konfigurationsobjekte, welche von dem Benutzer eingegeben werden, und Liefern von ihnen zu der eingebetteten Vorrichtung (200) durch ein Mittel für eine Kommunikation mit dem zweiten Typ von Vorrichtung, welches von dem Betriebssystem bereitgestellt wird;
- Erhalten der Konfigurationsobjekte durch die Verarbeitungseinheit (204) der eingebetteten Vorrichtung (200); und
- Durchführen einer Konfiguration der eingebetteten Vorrichtung (200) gemäß den erhaltenen Konfigurationsobjekten durch die Verarbeitungseinheit (204),
**dadurch gekennzeichnet, dass** die Mittel für eine Kommunikation mit dem zweiten Typ von Vorrichtung durch Befehlszeilen-Zugang auf Dateisystem-Anweisungen oder einen grafischen Dateimanager-Zugang gebildet sind, welcher von dem Betriebssystem bereitgestellt wird, wobei der zweite Typ von Vorrichtung, als welche sich die eingebettete Vorrichtung (200) selbst zu der Host-Vorrichtung (100) präsentiert, ein virtuelles Dateisystem ist, und wobei das Mittel für eine Kommunikation damit ein Erzeugen oder Entfernen einer Datei oder eines Verzeichnisses, ein Schreiben auf eine Datei oder ein Umbenennen einer Datei oder eines Verzeichnisses umfasst, welche/s in dem virtuellen Dateisystem gespeichert ist,
wobei das Mittel für ein Eingeben eines Konfigurationsobjekts durch eine Eingabeaufforderung gebildet ist, welche danach anfragt, eine Datei oder ein Verzeichnis umzubenennen, und das Mittel für ein Eingeben eines Konfigurationsobjekts durch ein Umbenennen der angezeigten Datei oder des Verzeichnisses mit dem Konfigurationsobjekt gebildet ist,
wobei die konfigurierbare Funktionalität der eingebetteten Vorrichtung (200) eine Funktionalität mit geschütztem Zugriff umfasst und die Konfigurationsobjekte Zugangsdetails umfassen,
wobei in einem freigegebenen Zustand der eingebetteten Vorrichtung (200) ein Zugriff auf die Funktionalität gewährt wird und in einem gesperrten Zustand der eingebetteten Vorrichtung (200) ein Zugriff auf die Funktionalität verweigert wird, wobei die Verarbeitungseinheit (204) der eingebetteten Vorrichtung die erhaltenen Zugangsdetails gegen zuvor gesetzte Zugangsdetails verifiziert, um die eingebettete Vorrichtung (200) zu entsperren.

2. Verfahren nach Anspruch 1, wobei die vorbestimmten Typen von eingebetteten Vorrichtung Drucker, Speichersysteme und Tastatur-Sperranzeiger umfassen.

3. Verfahren nach einem der vorhergehenden Ansprüche, wobei die eingebettete Vorrichtung (200) in wenigstens zwei diskreten Betriebszuständen betreibbar ist, und wobei die konfigurierbare Funktionalität ein Umschalten zwischen den diskreten Betriebszuständen umfasst.

4. Verfahren nach einem der vorhergehenden Ansprüche, wobei die eingebettete Vorrichtung (200) eine Speichereinheit (210) umfasst und die konfigurierbare Funktionalität ein Zugreifen auf in der Speichereinheit gespeicherte Daten ist, wobei vorzugsweise die Daten in einer verschlüsselten Weise gespeichert werden und das Zugreifen ein Entschlüsseln der Daten umfasst und/oder wobei vorzugsweise das Zugreifen auf die Daten einen Transfer der Daten umfasst, beispielsweise mittels des Media-Transfer-Protokolls oder des USB-Massenspeicher-Zugangsprotokolls.

5. Verfahren nach einem der vorhergehenden Ansprüche, wobei das Präsentieren oder Anbieten eines Mittels für ein Eingeben von Konfigurationsobjekten für einen Benutzer der Host-Vorrichtung (100) ein Präsentieren von Anweisungen für den Benutzer darüber umfasst, wie die Konfigurationsobjekte einzugeben sind.

6. Verfahren nach einem der Ansprüche 1 bis 4, wobei das Präsentieren oder Anbieten eines Mittels für ein Eingeben von Konfigurationsobjekten für einen Benutzer der Host-Vorrichtung (100) ein Verschleiern der konfigurierbaren Funktionalität für den Benutzer umfasst.

7. Computerlesbares Speichermedium, umfassend Anweisungen, welche wenn sie von einem Prozessor ausgeführt werden, ein Verfahren nach einem der vorhergehenden Ansprüche durchführen.

8. Eingebettete Vorrichtung (200) eines ersten Typs, welche dazu eingerichtet ist, ein Verfahren nach einem der Ansprüche 1 bis 6 durchzuführen, umfassend:
- eine Kopplungseinheit (202) zum Koppeln der eingebetteten Vorrichtung (200) an eine Host-Vorrichtung (100); und
- eine Verarbeitungsvorrichtung (204), welche dazu eingerichtet ist:
o die eingebettete Vorrichtung (200) für die Host-Vorrichtung (100) als ein zweiter Typ von Vorrichtung zu identifizieren, wobei der zweite Typ von dem ersten Typ verschieden sein kann oder verschieden von dem ersten Typ arbeiten kann,
∘ die Konfigurationsobjekte von der Host-Vorrichtung (100) zu erhalten; und
∘ eine Konfiguration der eingebetteten Vorrichtung (200) gemäß den erhaltenen Konfigurationsobjekten durchzuführen.

9. Eingebettete Vorrichtung (200) nach Anspruch 8, wobei die eingebettete Vorrichtung eines ist aus einer Eingabevorrichtung, beispielsweise einer konfigurierbaren Tastatur oder einer Fernbedienung, einer tragbaren Vorrichtung, beispielsweise einer Gesundheit-Überwachungsvorrichtung oder einer Smartwatch, einer konfigurierbaren Netzwerkvorrichtung oder einer entfernbaren Speichervorrichtung.

10. Eingebettete Vorrichtung (200) nach Anspruch 9, wobei die Kopplungseinheit (202) für eine physische Kopplung mit der Host-Vorrichtung (100) eingerichtet ist, wobei die Kopplungseinheit (202) vorzugsweise ein USB-Protokoll umfasst.

11. System (10) zum Zugreifen auf eine konfigurierbare Funktionalität auf einer eingebetteten Vorrichtung (200) nach Anspruch 9 oder 10, umfassend:
- die eingebettete Vorrichtung (200); und
- eine Host-Vorrichtung (100), umfassend eine Verarbeitungseinheit (104), ein darauf laufendes Betriebssystem und eine Schnittstelle (110, 112) für eine Interaktion mit einem Benutzer.

12. System (10) nach Anspruch 11, wobei das Betriebssystem der Host-Vorrichtung (100) auf eine Detektion der Kopplung der eingebetteten Vorrichtung (200) hin eine vorbestimmte Handlung auf Grundlage des zweiten Typs von Vorrichtung durchführt, als welche sich die eingebettete Vorrichtung (200) selbst zu der Host-Vorrichtung (100) identifiziert.

## Revendications

1. Procédé pour configurer un dispositif embarqué (200) d'un premier type dans un environnement informatique au moyen d'un dispositif hôte (100), dans lequel :
- le dispositif embarqué (200) comprend une unité informatique (204), qui est adaptée pour fournir une fonctionnalité configurable conformément à des éléments de configuration saisis de manière externe ; et
- le dispositif hôte (100) comprend un système d'exploitation s'exécutant sur celui-ci, dans lequel le système d'exploitation fournit des moyens respectifs pour une communication avec un nombre de types prédéterminés de dispositifs embarqués ;
le procédé comprenant les étapes suivantes :
- le couplage du dispositif embarqué (200) au dispositif hôte (100), dans lequel l'unité informatique (204) identifie le dispositif embarqué (200) au dispositif hôte (100) comme un second type de dispositif, dans lequel le second type peut être différent du premier type ou fonctionner d'une manière différente et est composé des types prédéterminés de dispositifs ;
- la présentation ou l'offre à un utilisateur du dispositif hôte (100) d'un moyen pour entrer des éléments de configuration ;
- la récupération des éléments de configuration entrés par l'utilisateur et leur transmission au dispositif embarqué (200) par un moyen pour une communication avec le second type de dispositif fourni par le système d'exploitation ;
- la réception des éléments de configuration par l'unité informatique (204) du dispositif embarqué (200) ; et
- la réalisation d'une configuration du dispositif embarqué (200) conformément aux éléments de configuration reçus par l'unité informatique (204),
**caractérisé en ce que** les moyens pour une communication avec le second type de dispositif sont constitués par le biais d'un accès par ligne de commande à des commandes de système de fichiers ou d'un accès par gestionnaire de fichiers graphiques fournis par le système d'exploitation, dans lequel le second type de dispositif sous lequel le dispositif embarqué (200) se présente lui-même au dispositif hôte (100) est un système de fichiers virtuel, et dans lequel le moyen pour une communication avec celui-ci comprend la création ou la suppression d'un fichier ou d'un répertoire, l'écriture dans un fichier ou le renommage d'un fichier, ou d'un répertoire stocké dans le système de fichiers virtuel,
dans lequel le moyen pour entrer un élément de configuration est constitué d'une invite demandant de renommer un fichier ou un répertoire et le moyen pour entrer un élément de configuration est constitué du renommage du fichier ou du répertoire de l'invite avec l'élément de configuration,
dans lequel la fonctionnalité configurable du dispositif embarqué (200) comprend une fonctionnalité avec un accès protégé et les éléments de configuration comprennent des renseignements d'accès,
dans lequel dans un état déverrouillé du dispositif embarqué (200) un accès à la fonctionnalité est autorisé et dans un état verrouillé du dispositif embarqué (200) un accès à la fonctionnalité est refusé,
- dans lequel l'unité informatique (204) du dispositif embarqué compare les renseignements d'accès reçus à des renseignements d'accès prédéfinis afin de déverrouiller le dispositif embarqué (200).

2. Procédé selon la revendication 1, dans lequel les types prédéterminés de dispositifs embarqués comprennent des imprimantes, des systèmes de stockage et des indicateurs de verrouillage de clavier.

3. Procédé selon l'une quelconque des revendications précédentes, dans lequel le dispositif embarqué (200) peut fonctionner dans au moins deux états de fonctionnement distincts, et dans lequel la fonctionnalité configurable comprend un va-et-vient entre les états de fonctionnement distincts.

4. Procédé selon l'une quelconque des revendications précédentes, dans lequel le dispositif embarqué (200) comprend une unité de stockage (210) et la fonctionnalité configurable est un accès à des données stockées dans l'unité de stockage,
dans lequel de préférence les données sont stockées d'une manière chiffrée et l'accès à celles-ci comprend le déchiffrement des données et/ou
dans lequel de préférence l'accès aux données comprend un transfert des données, par exemple au moyen du protocole MTP de transfert multimédia ou du protocole USB MSA d'accès à une mémoire de masse USB.

5. Procédé selon l'une quelconque des revendications précédentes, dans lequel la présentation ou l'offre à un utilisateur du dispositif hôte (100) d'un moyen pour entrer des éléments de configuration comprend la présentation à l'utilisateur d'instructions sur comment entrer les éléments de configuration.

6. Procédé selon l'une quelconque des revendications 1 à 4, dans lequel la présentation ou l'offre à un utilisateur du dispositif hôte (100) d'un moyen pour entrer des éléments de configuration comprend le masquage de la fonctionnalité configurable à l'utilisateur.

7. Support de stockage lisible par ordinateur, comprenant des instructions qui, lorsqu'elles sont exécutées par un processeur, réalisent un procédé selon l'une quelconque des revendications précédentes.

8. Dispositif embarqué (200) d'un premier type configuré pour réaliser un procédé selon l'une quelconque des revendications 1 à 6, comprenant :
- une unité de couplage (202) pour coupler le dispositif embarqué (200) à un dispositif hôte (100) ; et
- une unité informatique (204) qui est adaptée pour :
∘ identifier le dispositif embarqué (200) au dispositif hôte (100) comme un second type de dispositif, dans lequel le second type peut être différent du premier type ou fonctionner différemment du premier type,
∘ recevoir les éléments de configuration à partir du dispositif hôte (100) ; et
∘ réaliser une configuration du dispositif embarqué (200) conformément aux éléments de configuration reçus.

9. Dispositif embarqué (200) selon la revendication 8, dans lequel le dispositif embarqué est l'un d'un dispositif de saisie, par exemple un clavier ou une télécommande configurables, un dispositif à porter, par exemple un dispositif de surveillance de la santé ou une montre connectée, un dispositif de réseau configurable ou un dispositif de stockage amovible.

10. Dispositif embarqué (200) selon la revendication 9, dans lequel l'unité de couplage (202) est adaptée pour un couplage physique au dispositif hôte (100), dans lequel l'unité de couplage (202) comprend de préférence un protocole USB.

11. Système (10) pour accéder à une fonctionnalité configurable sur un dispositif embarqué (200) selon la revendication 9 ou 10, comprenant :
- le dispositif embarqué (200) ; et
- un dispositif hôte (100) comprenant une unité de traitement (104), un système d'exploitation s'exécutant sur celui-ci et une interface (110, 112) pour une interaction avec un utilisateur.

12. Système (10) selon la revendication 11, dans lequel le système d'exploitation du dispositif hôte (100) lors d'une détection du couplage du dispositif embarqué (200) réalise une action prédéterminée sur la base du second type de dispositif comme lequel le dispositif embarqué (200) se présente au dispositif hôte (100).
